Europäisches Patentamt

European Patent Office

Office européen des brevets

(19)

(11) Veröffentlichungsnummer: **0 048 467**
**B1**

(12) **EUROPÄISCHE PATENTSCHRIFT**

(45) Veröffentlichungstag der Patentschrift:
**22.05.85**

(51) Int. Cl.⁴: **F 16 B 12/20**, F 16 B 5/06

(21) Anmeldenummer: **81107418.6**

(22) Anmeldetag: **18.09.81**

(54) Mehrteiliger Holzkörper, insbesondere für Möbel und Wände.

(30) Priorität: **24.09.80 CH 7145/80**

(43) Veröffentlichungstag der Anmeldung:
**31.03.82 Patentblatt 82/13**

(45) Bekanntmachung des Hinweises auf die Patenterteilung:
**22.05.85 Patentblatt 85/21**

(84) Benannte Vertragsstaaten:
**AT CH DE IT LI LU**

(56) Entgegenhaltungen:
**EP - A - 0 010 278**
**DE - A - 1 934 738**
**FR - A - 2 082 576**
**US - A - 3 898 012**

(73) Patentinhaber: **Meienhofer, Hans, Gartenstrasse,**
**CH-8594 Güttingen (CH)**

(72) Erfinder: **Meienhofer, Hans, Gartenstrasse,**
**CH-8594 Güttingen (CH)**

(74) Vertreter: **Troesch, Hans Alfred, Dr. Ing. et al,**
**Walchestrasse 19, CH-8035 Zürich (CH)**

ACTORUM AG

## Beschreibung

Die vorliegende Erfindung betrifft einen mehrteiligen Holzkörper, insbesondere für Möbel und Wände, bei welchem einzelne benachbarte Teile im Bereich eines Verbindungsorgans eine durch eine Stossfuge getrennte Ringnut bilden, in welche das Verbindungsorgan eingesetzt ist.

Bei teuren Holzsorten, wie Nussbaum, Eiche, Kirschbaum u.dgl. Hölzer ist es betrüblich, feststellen zu müssen, dass deren Ausnützung, insbesondere im Möbelbau, schlecht ist. Dies ist unter anderem dadurch bedingt, dass die oberen Teile der Stämme und Astwerk meistens nur als Bauholz, Brennholz oder zur Herstellung von Spielwaren Verwendung finden, jedoch nicht für Möbel, Wohnwände u.dgl., insbesondere wegen ihren kleineren Dimensionen.

Ein weiterer Grund, weshalb solche Teile meist nicht zusammengeleimt zur Verwendung gelangen, bildet das oft recht unterschiedliche Verhalten beim Schwinden und Schwellen oder Treiben des Holzes, welches bei derart verleimten Konstruktionen zu Rissen führen kann, eine in der Möbelindustrie gefürchtete Auswirkung.

Es ist eine Spannhülsenverbindung von Körpern, insbesondere zur Befestigung von Platten bekannt geworden, die zur Abschirmung oder zur Abdeckung von Einschublücken in Baugruppenträgern für Leiterplatteneinschübe dienen. Die Spannhülsen sind mit einem ersten Körper durch Klemmsitz in einer Bohrung dieses Körpers verbunden, während zur Verbindung mit einem zweiten Körper ein plattenförmiger Teil dieses Körpers in einem aus der Bohrung des ersten Körpers herausragenden freien Ende der Spannhülse umklammert wird. Diese Umklammerung erfolgt dadurch, dass der plattenförmige Teil vom Längsschlitz der Spannhülse mit Klemmspannung aufgenommen wird und selbst eine schlitzförmige Randaussparung zur Aufnahme des dem Längsschlitz gegenüberliegenden Wandungsteiles der Spannhülse aufweist.

Diese Konstruktion steht aus den durch sie zu verbindenden Teilen vor und ist daher zur Verbindung von Teilen für die Möbelindustrie ungeeignet. Sie ist im übrigen auch nicht dafür vorgesehen (DE-A-1 934 738).

Um zwei Möbelteile oder zwei Möbel miteinander lösbar zu verbinden, sieht die US-A-3 898 012 einen zapfenförmigen Zwischenteil mit herzförmiger elastischer Klammer und Druckknopf vor. Dieses Zapfengebilde ragt in achsialer Richtung in beide Platten und ist daher für das Verbinden einzelner Teile zu Plattengebilden ungeeignet.

Es ist ferner eine demontierbare Verbindung bekannt geworden, welche erlaubt, zwei plattenförmige Gebilde in zueinander rechtwinkliger Lage lösbar zu verbinden. Dabei ist die eine Platte mit einem Schlitz und die andere mit einem entsprechenden, durch den Schlitz durchsteckbaren Kopf versehen, in dessen Nut nach dem Einführen des Kopfes in den Schlitz der anderen Platte ein Sicherungsring zu liegen kommt. Auch diese Konstruktion sieht das Verbinden nebeneinander liegender Teile zur Bildung grösserer Flächengebilde nicht vor und eignet sich daher in dieser Form zur Lösung der vorliegenden Aufgabe nicht (FR-A-2 082 576).

In einer weiteren Veröffentlichung (EP-A-0 010 278) wird eine Koppeleinrichtung für Raumgliederungselemente beschrieben. Diese dient der gelenkigen Verbindung von Trennwänden. Die Koppeleinrichtung weist eine ringsektorförmig verlaufende Nut auf, welche in eine ringsektorförmige Aussparung mündet, wobei ein als zylindrische Kappe ausgebildetes Koppelelement in die Nut achsial einsetzbar und mit einer Nase in die Aussparung eindrehbar ist.

Diese Koppeleinrichtung erlaubt das gelenkige Verbinden von Teilen, wobei die Möglichkeit eines Schwindens oder Quellens dieser Teile, wie dies bei Holz feuchtigkeitsbedingt ist, nicht berücksichtigt wird. Diese Verbindung ist daher für die Lösung der vorliegenden Aufgabe nicht geeignet.

Die vorliegende Erfindung bezweckt die Schaffung einer Möglichkeit, mehrteilige Holzkörper, insbesondere für Möbel und Wände, herzustellen, welche derart miteinander verbunden sind, dass unterschiedliches Schwinden und Schwellen dieser Teile keine Risse erzeugt. Dies gestattet es, bisheriges Abfallholz für den Möbel- und Wandbau verwendbar zu gestalten.

Diese Aufgabe löst der mehrteilige Holzkörper gemäss der Kennzeichnung des Anspruchs 1.

Ein Ausführungsbeispiel des Erfindungsgegenstandes wird anschliessend anhand einer Zeichnung erläutert.

Es zeigen:

Fig. 1 eine Aufsicht auf einen Teil einer Möbelwand, mit zwei brettförmigen, federelastisch miteinander verbundenen Holzteilen,

Fig. 2 einen Schnitt gemäss Schnittlinie II–II der Fig. 1.

Zwei aus bisherigem Abfallholz bestehende brettförmige Holzteile 1 und 2 bilden Teil einer Möbelwand 4. Die beiden brettförmigen Holzteile 1 und 2 – für einen anderen Gebrauch brauchen diese Teile nicht brettförmig zu sein – weisen je eine Stossfläche 6, 7 auf, die eine Fuge 9 festlegen. In diese Fuge 9 ist ein gummielastisches Material, vorzugsweise ein an beiden Breitseiten mit Klebstoff versehenes Schaumgummiband 10, eingelegt und mit den Stossflächen 6 und 7 verklebt.

Um die beiden Holzteile 1 und 2 federnd miteinander zu verbinden, ist in diese an zwei (es können eine oder mehrere sein) Verbindungsstellen je eine Ringnut 12 eingefräst, welche innen durch einen vollen Kern 13 begrenzt ist. Kern 13 und Ringnut 12 setzen sich aus zwei Teilen zusammen, wenn zwei Holzteile miteinander verbunden werden. Sie sind indessen drei- oder mehrteilig, wenn drei und mehr Holzteile an der Verbindungsstelle miteinander verbunden werden. Die Verbindung der beiden Holzteile 1 und 2 erfolgt mittels eines offenen Klemmringes 15, welcher aus Metall, insbesondere Stahl, oder aus Gummi bestehen kann. Anstelle eines im Querschnitt kreisförmigen Klemmringes 15 kann auch eine, z.B.

längsgeschlitzte Klemmanschette oder -hülse, verwendet werden. In jedem Fall ist das Klemmorgan offen, so dass es sich spreizen und zusammenpressen lässt.

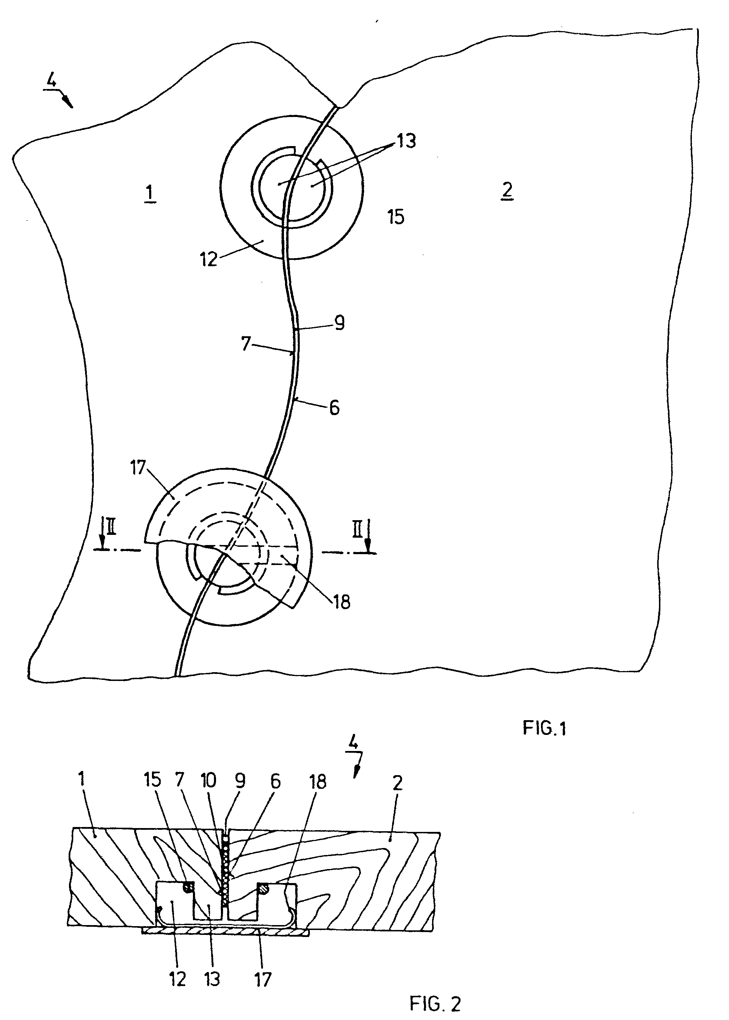

Der Kern 13 ist vorzugsweise kreiszylindrisch, ebenso die Ringnut 12. Der Kern 13 ist weniger hoch als die Ringnut 12 tief ist, was beispielsweise gestattet, einen Deckel 17 mit Feder 18 in die Ringnut 12, in der in Fig. 2 dargestellten Weise, einzuschieben und damit die Verbindungsstelle zu tarnen.

Wenn nun das Holz schwindet oder anschwillt, gestattet die federnde Verbindung, gegeben durch den offenen Klemmring 15, dass die beiden Holzteile 1 und 2 sich in jeder Richtung ohne Rissbildung dehnen können, da die entstehenden Kräfte durch das Klemmorgan, d. h. den Verbindungsring 15 oder eine entsprechende Manschette, aufgenommen werden. Da bei diesen Bewegungen auch die Breite der Fuge 9 sich ändern kann, diese aber dicht sein soll, ist das Schaumgummiband 10 – es kann auch ein gewelltes Gummiband, wie dies zu Abdichtungszwecken bekannt ist, verwendet werden – in die Fuge 9 eingebracht und mit den beiden Stossflächen 6 und 7 verklebt.

Es ist grundsätzlich möglich, der Ringnut 12 keine kreiszylindrische, sondern eine andere Gestalt zu geben, was aber herstellungstechnisch im allgemeinen aufwendiger ist und bezüglich Verbindung nichts Zusätzliches zu bringen vermag. Es ist ferner möglich, an mindestens einer Stelle die Holzteile mittels eines Zapfens zu führen, wobei der Zapfen des einen Holzteiles im Loch des anderen ein, den Schwingmassen des Holzes entsprechendes Spiel aufweisen kann. Es ist aber auch möglich, diese Verbindung als Festpunkt auszubilden, ähnlich wie dies bei Fundamenten von Dampfturbinen durchgeführt wird.

**Patentansprüche**

1. Mehrteiliger Holzkörper, insbesondere für Möbel und Wände (4), bei welchem einzelne benachbarte Teile (1, 2) im Bereich eines Verbindungsorgans eine durch eine Fuge (9) getrennte Ringnut (12) bilden, in welche das Verbindungsorgan eingesetzt ist, dadurch gekennzeichnet, dass das Verbindungsorgan als Klemmorgan (15) ausgebildet ist, das die benachbarten Teile (1, 2) federnd miteinander derart verbindet, dass ein Schwinden und Schwellen dieser Holzteile (1, 2) ohne Rissbildung sichergestellt ist.

2. Holzkörper nach Anspruch 1, dadurch gekennzeichnet, dass das Klemmorgan (15) als offener Klemmring oder als offene Manschette ausgebildet ist.

3. Holzkörper nach Anspruch 1, dadurch gekennzeichnet, dass der mehrteilige, vorzugsweise kreiszylindrische Kern (13), einen dem Klemmorgan (15), vorzugsweise dem Ring, entsprechenden Umfang aufweist, derart, dass die Kraft des Klemmorganes (15) über den Kern (13) auf die Holzteile (1, 2) übertragen wird, um sie federnd miteinander zu verbinden.

4. Holzkörper nach Anspruch 1, dadurch gekennzeichnet, dass die Höhe des Kerns (13) geringer ist als die Tiefe der Ringnut (12).

5. Holzkörper nach Anspruch 1, dadurch gekennzeichnet, dass zum Abdecken der Verbindung ein Deckel (17, 18), vorzugsweise ein Klemmdeckel, vorgesehen ist.

6. Holzkörper nach Anspruch 1, dadurch gekennzeichnet, dass eine Verbindungsstelle mindestens zwei Holzteile (1, 2) miteinander verbindet.

7. Holzkörper nach Anspruch 1, dadurch gekennzeichnet, dass das Klemmorgan (15) aus Metall, vorzugsweise Stahl, oder aus Gummi, besteht.

8. Holzkörper nach Anspruch 1, dadurch gekennzeichnet, dass in den Fugen (9) zwischen den Holzteilen (1, 2) gummielastisches Material, vorzugsweise ein beidseitig klebendes Schaumgummiband (10), angeordnet ist.

9. Holzkörper nach Anspruch 1, dadurch gekennzeichnet, dass die Holzteile (1, 2) unter sich zusätzlich durch mindestens einen Zapfen in einer Bohrung, vorzugsweise mit den Holzbewegungen entsprechenden Spielen, verbunden sind.

**Claims**

1. Multipart wooden body especially for pieces of furniture and for walls, in which body single adjacent parts (1, 2) are forming in the range of a coupling element an annular groove (12) separated by a joint in which annular groove the coupling element is inserted, characterized in that the coupling element is a cramping element (15), which is coupling the adjacent parts (1, 2) resiliently with one another, so that a shrinkage and swelling of these wooden parts (1, 2) is secured without formation of cracks.

2. Wooden body according to claim 1, characterized in that the cramping element (15) is constructed as an open cramping ring or as an open sleeve.

3. Wooden body according to claim 1, characterized in that the multipart core, preferably circular cylinder core (13), has a circumference corresponding to the cramping element, the ring respectively, so that the force of the cramping element (15) is transmitted through the core (13) to the wooden parts (1, 2) for resilient connection with one another.

4. Wooden body according to claim 1, characterized in that the height of the core (13) is smaller than the depht of the annular groove (12).

5. Wooden body according to claim 1, characterized by a cover (17, 18), preferably a cramping-cover, for the covering of the coupling element (15).

6. Wooden body according to claim 1, characterized in that in a junction at least to wooden parts (1, 2) are coupled together.

7. Wooden body according to claim 1, characterized in that the cramping element (15) is of metal, preferably steel, or of rubber.

8. Wooden body according to claim 1, characterized in that in the joint between the wooden parts (1, 2) there is a rubber-elastic material, preferably a foam rubber band, sticking on both sides of the joint.

9. Wooden body according to claim 1, characterized in that the wooden parts (1, 2) are connected additionally together by at least one pin in a bore, preferably with a clearance according to movements of the wood.

**Revendications**

1. Corps de bois composé, en particulier pour meubles et parois (4), dans lequel les diverses parties (1, 2) adjacentes forment dans la zone d'un élément de connexion une rainure annulaire (12) séparée par un joint (9), l'élément de connexion étant inséré dans la rainure, caractérisé en ce que l'élément de connexion a la forme d'un moyen de serrage (15) qui unit les parties (1, 2) adjacentes de façon élastique de telle sorte qu'un rétrécissement et gonflement de ces parties (1, 2) de bois est assuré sans formation de fissures.

2. Corps de bois selon la revendication 1, caractérisé en ce que le moyen de serrage (15) a la forme d'un anneau de serrage ouvert ou d'une manchette ouverte.

3. Corps de bois selon la revendication 1, caractérisé en ce que le noyau (13) composé, qui a de préférence la forme d'un cylindre circulaire, a une circonférence correspondant au moyen de serrage (15), de préférence l'anneau, de sorte que la force du moyen de serrage (15) est transmise par le noyau (13) sur les parties de bois (1, 2) pour les unir de façon élastique.

4. Corps de bois selon la revendication 1, caractérisé en ce que la hauteur du noyau (13) est plus petite que la profondeur de la rainure circulaire (12).

5. Corps de bois selon la revendication 1, caractérisé en ce qu'un couvercle (17, 18), de préférence un couvercle à fixation par coincement, est prévu pour recouvrir la jonction.

6. Corps de bois selon la revendication 1, caractérisé en ce que un point de jonction unit au moins deux parties de bois (1, 2).

7. Corps de bois selon la revendication 1, caractérisé en ce que le moyen de serrage (15) est en métal, de préférence en acier, ou en caoutchouc.

8. Corps de bois selon la revendication 1, caractérisé en ce que une matière élastique comme du caoutchouc, de préférence une bande de caoutchouc mousse (10) collant sur les deux côtés, est disposée dans les joints (9), entre les parties de bois (1, 2).

9. Corps de bois selon la revendication 1, caractérisé en ce que les parties de bois (1, 2) sont unies entre elles additionnellement par au moins ou tourillon dans un alésage, de préférence avec des jeux correspondant au mouvement du bois.

0 048 467

FIG.1

FIG. 2